# EUROPEAN PATENT SPECIFICATION

(11) **EP 3 477 830 B1**
(45) Date of publication and mention of the grant of the patent: **08.03.2023**
(21) Application number: 17834320.8
(22) Date of filing: 25.07.2017
(51) Int. Cl.: H02K 1/276, H02K 1/27, H02K 15/03

(54) **ROTOR AND ROTARY ELECTRIC MACHINE**
ROTOR UND ELEKTRISCHE DREHMASCHINE
ROTOR ET MACHINE ÉLECTRIQUE ROTATIVE

(30) Priority: 25.07.2016 JP 2016145589
(43) Date of publication of application: 01.05.2019
(73) Proprietor: Daikin Industries, Ltd., Osaka-shi, Osaka 530-0001 (JP)
(72) Inventor: OKUYAMA, Yoshitaka, Osaka-shi Osaka 530-8323 (JP); YASUDA, Yoshiki, Osaka-shi Osaka 530-8323 (JP)
(74) Representative: Goddar, Heinz J.
(86) International application number: PCT/JP2017/026880
(87) International publication number: WO 2018/021318

(56) References cited:
- EP-A2- 3 016 250
- JP-A- 2012 130 130
- JP-A- 2014 057 392
- JP-A- 2014 057 392
- JP-A- 2014 057 433
- JP-A- 2015 126 677
- JP-A- 2015 126 677
- JP-A- 2016 127 682

## Description

### TECHNICAL FIELD

The present disclosure relates to a rotor and a rotary electric machine.

### BACKGROUND ART

Rotary electric machines such as electric motors and generators have been used. As one example of such rotary electric machines, a rotary electric machine (what is called an interior permanent magnet motor) including a rotor in which permanent magnets are embedded in a rotor core is known. A rotor included in a rotary electric machine of this type is disclosed in Patent Document 1, for example. Patent Document 1 discloses a rotor in which slits of a rotor core are filled with a resin magnet. In Patent Document 1, after the rotor core is mounted on a lower mold and an intermediate mold and an upper mold are disposed on an upper surface of the lower mold, the resin magnet is introduced therein from an introduction port of the upper mold. Through this process, the resin magnet introduced from the introduction port of the upper mold is charged into the respective slits of the rotor core accommodated in the lower mold through a sprue runner and gates of the intermediate mold. The rotor is manufactured in this manner. The closest prior art is nevertheless regarded as EP3016250 which discloses a rotor having an axial hole for a resin magnet and two gate holes at two circumferential ends of the axial hole for injecting the resin magnet into the axial hole.

### CITATION LIST

### PATENT DOCUMENT

Patent Document 1: Japanese Unexamined Patent Publication No. 2003-47212

### SUMMARY OF THE INVENTION

### TECHNICAL PROBLEM

In the manufacture of the rotor of Patent Document 1, it can be considered that the gates vertically extending from the sprue runner toward the slits (magnet holes) of the rotor core are omitted, and the sprue runner and an upper side (one end side in the axial direction) of the rotor core are brought into contact with each other to directly inject melted resin from the sprue runner into the magnet holes of the rotor core. In this case, after the melted resin charged into the magnet holes of the rotor core and the sprue runner is solidified therein, the rotor core is removed from the molds, and then a removal step of removing an excess portion (additional and unneeded portion of bond magnets) formed on the one end side of the rotor core in the axial direction is performed. The excess portion is formed of resin (thermoplastic resin containing magnet powder) that has been charged into the sprue runner and then solidified therein, and is integrated with the bond magnets charged into the magnet holes of the rotor core. In the removal step, force acting in a direction in which the excess portion is separated apart from the bond magnets (hereinafter, referred to as "tensile force") is applied to junctions between the excess portion and the bond magnets, and by this tensile force, the junctions are broken and the excess portion is separated apart from the bond magnets.

However, when the sprue runner and the one end side of the rotor core in the axial direction is brought into contact with each other and the melted resin is directly injected from the sprue runner into the magnet holes of the rotor core, the cross-sectional area (junction area) of junctions between the excess portion and the bond magnets tends to be relatively large, which makes it difficult in the removal step to break the junctions between the excess portion and the bond magnets along one end face of each bond magnet in the axial direction. Thus, breaking the junctions between the excess portion and the bond magnets under the tensile force may easily cause manufacturing failure, i.e., part of the excess portion remains as a broken piece on one end side of each bond magnet in the axial direction. Such manufacturing failure may lead to defective assembly of the rotary electric machine or a device equipped with the rotary electric machine (e.g., a compressor).

In view of the foregoing, it is an object of the present disclosure to provide a rotor that can reduce the possibility of occurrence of manufacturing failure.

### SOLUTION TO THE PROBLEM

A first aspect of the present disclosure is directed to a rotor including: a rotor core (20) having a magnet hole (21) penetrating the rotor core (20) in an axial direction; a first end plate (31) provided for one end side of the rotor core (20) in the axial direction and having a gate hole (32) communicating with the magnet hole (21); and a bond magnet (40) charged into the magnet hole (21) and the gate hole (32), wherein the gate hole (32) is formed to be smaller than the magnet hole (21) and is positioned inside the magnet hole (21) when viewed in plan.

In the first aspect, in a process of manufacturing the rotor (specifically, in a removal step), an excess portion (70) formed on one end side (a side closer to the first end plate (31)), in the axial direction, of an assembly of the rotor core (20) and the first end plate (31) (hereinafter, referred to as a "rotor core assembly (30)") is removed. The excess portion (70) is an additional and unneeded portion of the bond magnet (40), and is integrated with the bond magnet (40) charged into the magnet hole (21) of the rotor core (20) and the gate hole (32) of the first end plate (31). Specifically, in the process of manufacturing the rotor, force acting in a direction in which the excess portion (70) is separated apart from the bond magnet (40) (hereinafter, referred to as "tensile force") is applied to a junction between the excess portion (70) and the bond magnet (40). This tensile force breaks the junction between the excess portion (70) and the bond magnet (40) and separates the excess portion (70) apart from the bond magnet (40).

In the first aspect, the gate hole (32) is formed to be smaller than the magnet hole (21) and the gate hole (32) is arranged inside the magnet hole (21) when viewed in plan. This can reduce the cross-sectional area of the junction (junction area) between the excess portion (70) and the bond magnet (40). Accordingly, tensile stress applied to the junction between the excess portion (70) and the bond magnet (40) (specifically, a junction surface thereof extending along one end face of the first end plate (31) in the axial direction) in the process of manufacturing the rotor (specifically, the removal step) can be increased. Thus, when tensile force is applied to the junction between the excess portion (70) and the bond magnet (40) in the process of manufacturing the rotor, the junction between the excess portion (70) and the bond magnet (40) can be caused to break along the one end face of the first end plate (31) in the axial direction.

According to the invention, the gate hole (32) includes a plurality of separate gate holes (33).

The gate hole (32) includes the separate gate holes (33), which can increase the amount of melted resin (molten resin that forms the bond magnet) introduced per unit time into the magnet hole (21) in the process of manufacturing the rotor. Thus, the melted resin can be quickly distributed in the magnet hole (21).

Further, according to the invention, the separate gate holes (33) include a central hole (33a) positioned at a circumferentially central portion of the magnet hole (21) and two end holes (33b, 33c) positioned at circumferentially end portions of the magnet hole (21).

The gate hole (32) includes the central hole (33a) and the end hole (33b), which allows the melted resin to be evenly distributed in the magnet hole (21).

According to another aspect, which is not part of the invention, the magnet hole (21) is partitioned with one or more bridges (22) into a plurality of separate magnet holes (23), the gate hole (32) includes a plurality of separate gate holes (33) communicating with the respective separate magnet holes (23), and each separate gate hole (33) is formed to be smaller than the corresponding separate magnet hole (23) and is positioned inside the separate magnet hole (23) when viewed in plan.

According to that aspect which is not part of the invention, the gate hole (32) includes the separate gate holes (33) communicating with the respective separate magnet holes (23), which allows the melted resin (molten resin that forms the bond magnet) to be charged into each of the separate magnet holes (23). Furthermore, each separate gate hole (33) is formed to be smaller than the corresponding separate magnet hole (23) and the separate gate hole (33) is arranged inside the separate magnet hole (23) when viewed in plan. This configuration allows tensile force, if applied to the junction between the excess portion (70) and the corresponding bond magnet (40) in the process of manufacturing the rotor (10), to break the junction between the excess portion (70) and the bond magnet (40) at the separate gate hole (33) along the one end face of the first end plate (31) in the axial direction.

Another aspect of the present disclosure is directed to a rotary electric machine including the rotor and a stator (11) in which the rotor is inserted.

In this aspect, the possibility of occurrence of manufacturing failure, i.e., part of the excess portion (70) remains as a broken piece (75) on the one end side of the bond magnet (40) in the axial direction, can be reduced.

### ADVANTAGES OF THE INVENTION

According to an aspect which is not part of the invention, of the present disclosure, tensile force, if applied to the junction between the excess portion (70) and the bond magnet (40) in the process of manufacturing the rotor, can break the junction between the excess portion (70) and the bond magnet (40) along the one end face of the first end plate (31) in the axial direction. This can reduce the possibility of occurrence of manufacturing failure of the rotor (10), i.e., part of the excess portion (70) remains as a broken piece (75) on the one end side of the bond magnet (40) in the axial direction.

According to another aspect of the present disclosure, melted resin can be quickly distributed in the magnet hole (21), and thus the degree of orientation of resin (i.e., the bond magnet (40)) that has been charged into the magnet hole (21) of the rotor core (20) and solidified therein can be increased.

According to another aspect of the present disclosure, the melted resin can be evenly distributed in the magnet hole (21), and thus the degree of orientation of resin (i.e., the bond magnet (40)) that has been charged into the magnet hole (21) of the rotor core (20) and solidified therein can be increased.

According to another aspect which is not part of the invention, in each separate gate hole (33), the corresponding junction between the excess portion (70) and the bond magnet (40) can be caused to break along the one end face of the first end plate (31) in the axial direction. This can reduce the possibility of occurrence of manufacturing failure of the rotor (10) in which part of the excess portion (70) remains as a broken piece (75) on the one end side of the bond magnet (40) in the axial direction.

According to another aspect which is not part of the invention, the possibility of occurrence of manufacturing failure, i.e., part of the excess portion (70) remains as a broken piece (75) on the one end side of the bond magnet (40) in the axial direction, can be reduced. This can substantially prevent or reduce the occurrence of defective assembly of the rotary electric machine due to the manufacturing failure of the rotor.

### BRIEF DESCRIPTION OF THE DRAWINGS

[FIG. 1] FIG. 1 is a plan view illustrating a configuration example of a rotary electric machine which is not part of the invention.
[FIG. 2] FIG. 2 is a longitudinal sectional view illustrating a configuration example of a rotor which is not part of the invention.
[FIG. 31 FIG. 3 is a longitudinal sectional view illustrating a lower mold into which a rotor core is fitted and an upper mold. which is not part of the invention.

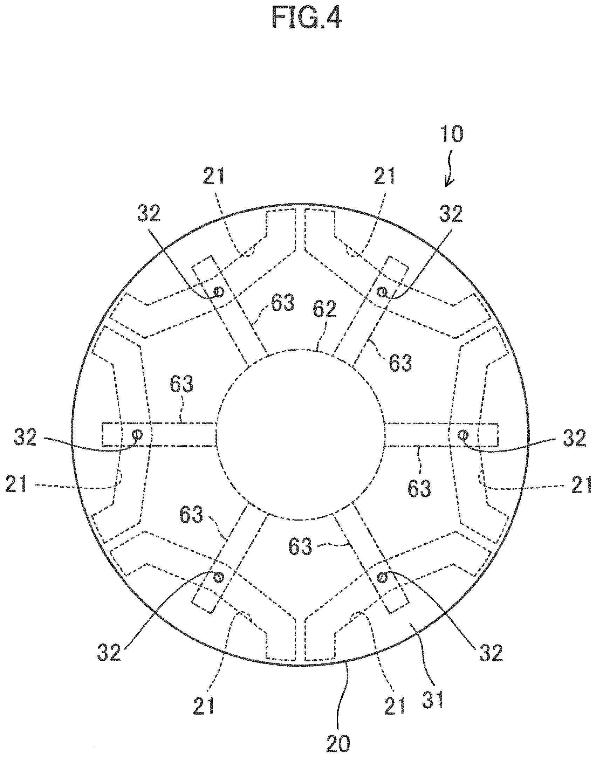

[FIG. 4] FIG. 4 is a plan view illustrating positions of gate holes and runners which is not part of the invention.

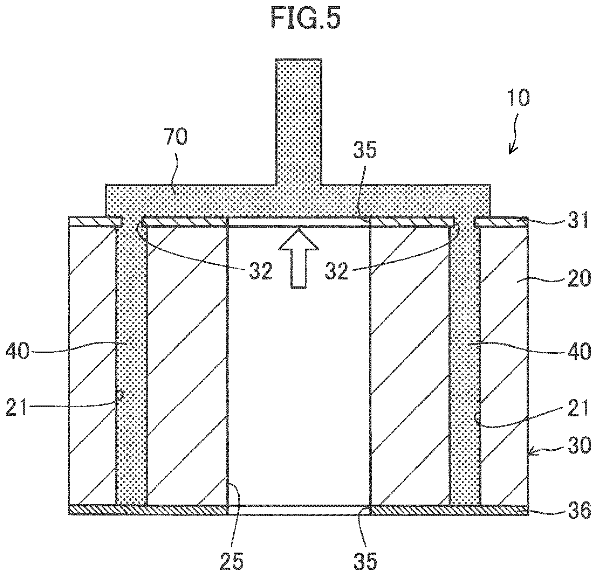

[FIG. 5] FIG. 5 is a longitudinal sectional view illustrating one example of an intermediate product in a rotor manufacturing process which is not part of the invention.

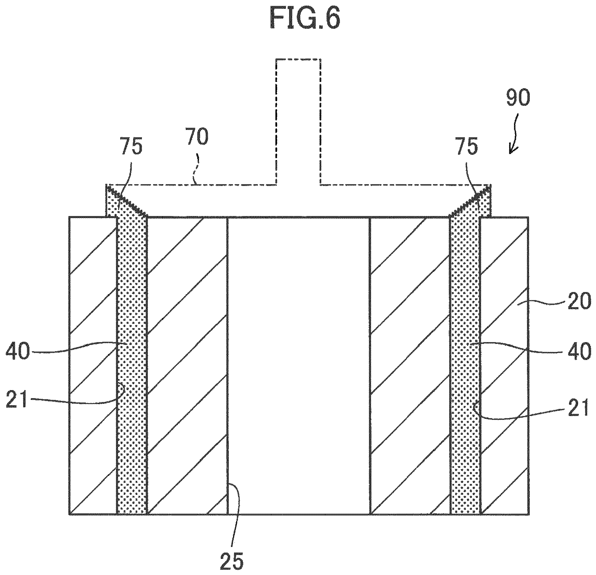

[FIG. 6] FIG. 6 is a longitudinal sectional view illustrating a comparative example of the rotor. which is not part of the invention.

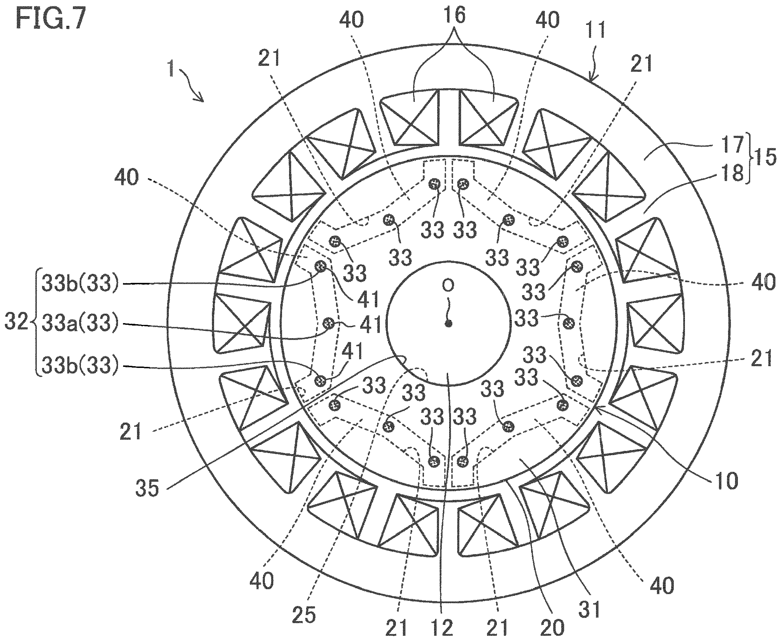

[FIG. 7] FIG. 7 is a plan view illustrating a first modification of the rotor. according to the invention.

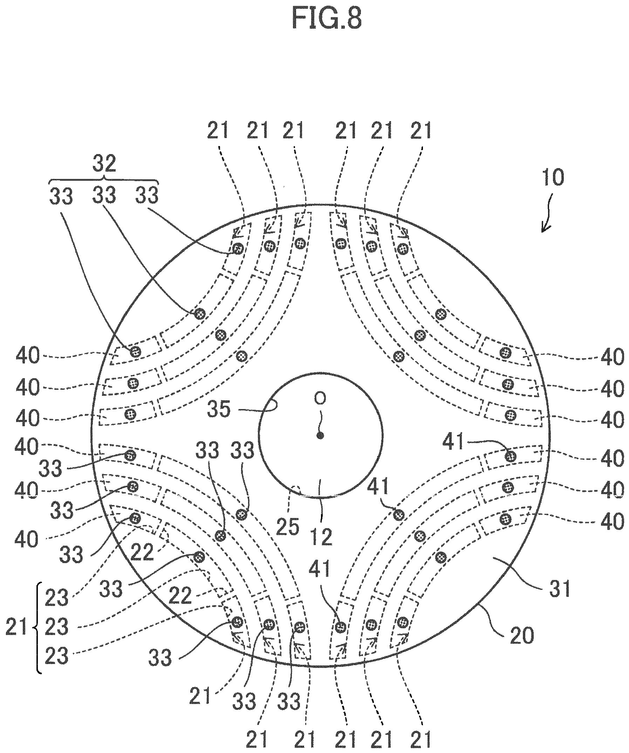

[FIG. 8] FIG. 8 is a plan view illustrating a second modification of the rotor. which is not part of the invention.

### DESCRIPTION OF EMBODIMENTS

Embodiments will be described below in detail with reference to the drawings. In the drawings, like or equivalent elements are designated by like reference characters, and duplicate description is omitted.

### (Rotary Electric Machine)

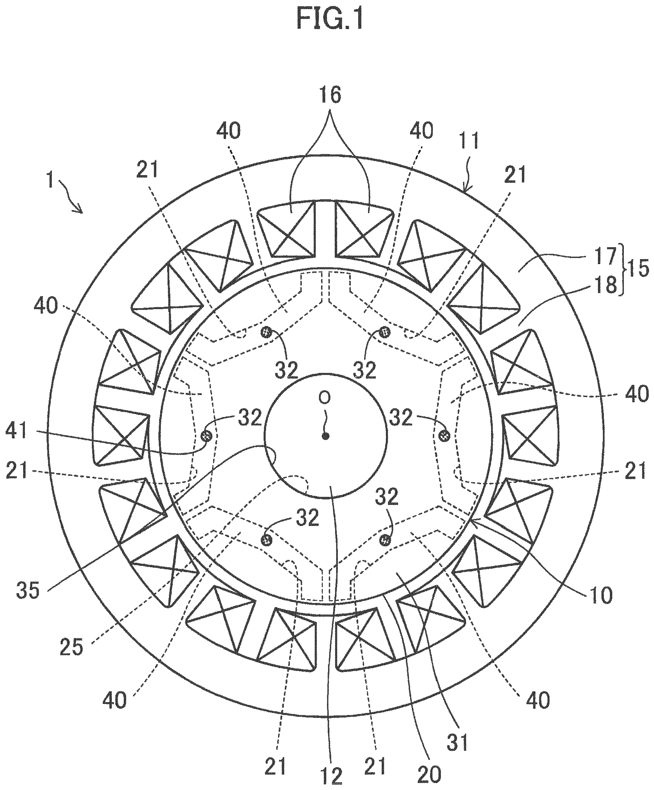

FIG. 1 illustrates a configuration example of a rotary electric machine (1) according to an embodiment. which is not part of the invention.

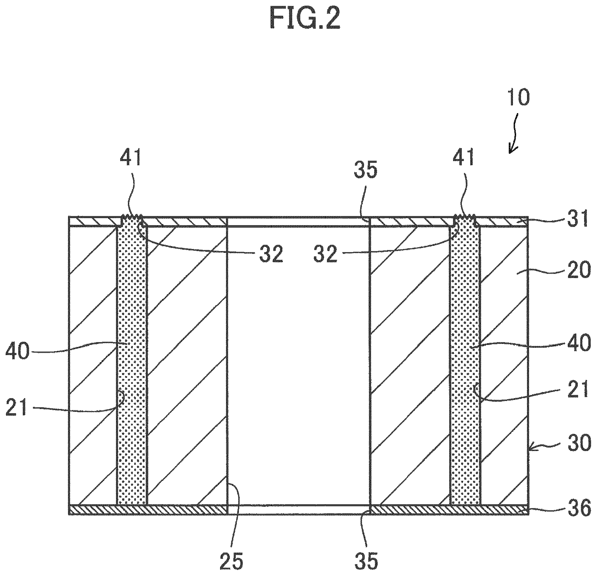

The rotary electric machine (1) includes a rotor (10), a stator (11), and a drive shaft (12). In this example, the rotary electric machine (1) is configured as an interior permanent magnet motor (IPM motor). Although FIG. 1 is a schematic plan view of the rotary electric machine (1), a transverse cross-section of the stator (11) is illustrated in FIG. 1 for convenience of description. FIG. 2 is a schematic longitudinal sectional view of the rotor (10).

In the following description, the "axial direction" means a direction of an axis (a rotation center (O) of the rotor (10)) of a rotor core (20), the "radial direction" means a direction orthogonal to the axial direction of the rotor core (20), and the "circumferential direction" means a direction along a circle centered around the axis of the rotor core (20). The term "radially outward" means toward a side farther from the axis of the rotor core (20), and the term "radially inward" means toward a side closer to the axis of the rotor core (20). The "longitudinal section" means a section taken along the axial direction, and the "transverse cross-section" is a section orthogonal to the axial direction.

### [Stator]

The rotor (10) is inserted in the stator (11). The stator (11) includes a stator core (15) and coils (16). The stator core (15) has a back-yoke portion (17) formed in a cylindrical shape, and a plurality of (nine in this example) tooth portions (18) extending radially from an inner peripheral surface of the back-yoke portion (17). Each coil (16) is wound around the corresponding tooth portion (18). In FIG. 1, the stator core (15) is not hatched for simplification of illustration.

### [Rotor]

FIG. 1 and FIG. 2 illustrate a configuration example of the rotor (10) according to the embodiment. which is not part of the invention.

The rotor (10) includes the rotor core (20), a first end plate (31), a second end plate (36), and a plurality of (six in this example) bond magnets (40).

### <Rotor Core>

The rotor core (20) is formed in a columnar shape. For example, the rotor core (20) may be formed by blanking a magnetic steel sheet by pressing to prepare a plurality of plates (disks), and stacking the plates in the axial direction.

The rotor core (20) has a plurality of (six in this example) magnet holes (21). The magnet holes (21) are arranged around the rotation center (O) of the rotor (10) at predetermined pitches (60-degree pitches in this example). The magnet holes (21) penetrate the rotor core (20) in the axial direction. Each magnet hole (21) is formed to extend in the circumferential direction of the rotor core (20) and to traverse the radial direction of the rotor core (20) when viewed in plan. In this example, the magnet hole (21) is formed in a U-shape protruding radially inward when viewed in plan.

The rotor core (20) has a shaft hole (25) formed in a center portion thereof. The drive shaft (12) is inserted in and fixed to the shaft hole (25).

### <First End Plate>

The first end plate (31) is formed in a disk shape. In this example, the first end plate (31) is made of a nonmagnetic material, and is formed in a disk shape having the same diameter as that of the rotor core (20). The first end plate (31) is provided for one end side of the rotor core (20) in the axial direction to close the magnet holes (21) on the one end side of the rotor core (20) in the axial direction.

The first end plate (31) is provided with a plurality of (six in this example) gate holes (32). The gate holes (32) penetrate the first end plate (31) in the axial direction to communicate with the respective magnet holes (21) of the rotor core (20). In this example, which is not part of the invention, six gate holes (32) of the first end plate (31) each correspond to the six magnet holes (21) of the rotor core (20). In other words, in this example, which is not part of the invention, one gate hole (32) is formed for each magnet hole (21).

Each gate hole (32) is formed to be smaller than the magnet hole (21) corresponding to the gate hole (32) and is positioned inside the magnet hole (21) corresponding to the gate hole (32) when viewed in plan. In other words, each gate hole (32) is formed at a position overlapping the corresponding magnet hole (21) when viewed from the axial direction of the rotor core (20). In this example, the gate hole (32) is formed in a circular shape (circular shape having a diameter equal to or larger than one millimeter and equal to or smaller than five millimeters, for example) when viewed in plan. In this example, the gate hole (32) is arranged at a circumferentially central portion of the magnet hole (21).

Furthermore, the first end plate (31) has a through hole (35). The through hole (35) penetrates a central portion of the first end plate (31) in the axial direction to communicate with the shaft hole (25) of the rotor core (20).

### <Second End Plate>

The second end plate (36) is formed in a disk shape. In this example, the second end plate (36) is made of a nonmagnetic material, and is formed in a disk shape having the same diameter as that of the rotor core (20). The second end plate (36) is provided for the other end side of the rotor core (20) in the axial direction to close the magnet holes (21) on the other end side of the rotor core (20) in the axial direction.

The second end plate (36) has a through hole (35). The through hole (35) penetrates a central portion of the second end plate (36) in the axial direction to communicate with the shaft hole (25) of the rotor core (20). In this example, the second end plate (36) has no gate holes (32).

### <Bond Magnet>

The bond magnets (40) are charged into the respective magnet holes (21). In this example, the bond magnets (40) are embedded in the rotor core (20) through injection of melted resin (molten thermoplastic resin) containing magnet powder such as powder of neodymium iron boron-based magnet or powder of ferrite magnet into the magnet holes (21), and solidification of the melted resin. The bond magnets (40) each have an outer peripheral surface and an inner peripheral surface that form pole faces (S-pole face/N-pole face), and are magnetized such that different poles (S-pole/N-pole) are alternately aligned in the circumferential direction of the rotor (10).

The bond magnets (40) are charged into not only the magnet holes (21) of the rotor core (20) but also the gate holes (32) of the first end plate (31) communicating with the magnet holes (21). In other words, the magnet holes (21) and the gate holes (32) are filled with the bond magnets (40).

A gate mark (41) is formed in one end portion of each bond magnet (40) in the axial direction (an upper portion of each bond magnet in FIG. 2, specifically, a portion thereof charged into the corresponding gate hole (32)). The gate mark (41) has an uneven surface having fine projections and depressions.

### [Mold used in Rotor Manufacturing Process]

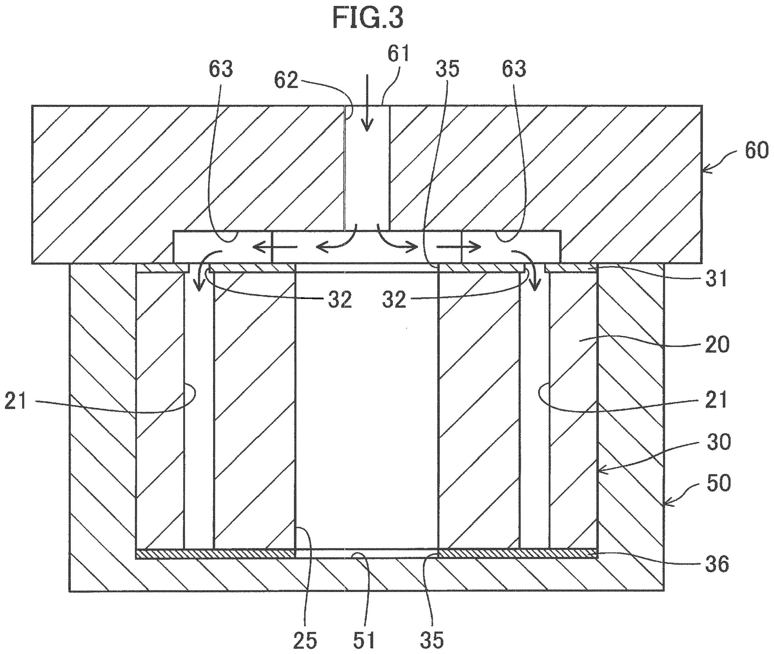

Molds (a lower mold (50) and an upper mold (60)) used in the process of manufacturing the rotor (10) will be described first with reference to FIG. 3 and FIG. 4 prior to the description of a process of manufacturing the rotor (10). Hereinafter, for convenience of description, an assembly of the rotor core (20), the first end plate (31), and the second end plate (36) will be referred to as a "rotor core assembly (30)", a side of the rotor core assembly (30) closer to the first end plate (31) will be referred to as "one end side of the rotor core assembly (30) in the axial direction," and a side of the rotor core assembly (30) closer to the second end plate (36) will be referred to as "the other end side of the rotor core assembly (30) in the axial direction."

### <Lower Mold>

The lower mold (50) is configured so that the rotor core assembly (30) can be fitted thereinto. Specifically, a recessed portion (51) is formed in a central portion of an upper surface (one end face in the axial direction) of the lower mold (50). The recessed portion (51) is formed in a circular shape when viewed in plan, and is configured so that the rotor core assembly (30) can be fitted thereinto. When the rotor core assembly (30) is fitted into the recessed portion (51) with the one end side of the rotor core assembly (30) in the axial direction (a side closer to the first end plate (31)) facing upward and with the other end side thereof in the axial direction (a side closer to the second end plate (36)) facing downward, the other end face of the rotor core assembly (30) in the axial direction (lower surface of the second end plate (36) in FIG. 3) is covered with a bottom surface of the recessed portion (51).

### <Upper Mold>

The upper mold (60) can be clamped to the lower mold (50). When the lower mold (50) into which the rotor core assembly (30) is fitted is clamped to the upper mold (60), the upper mold (60) covers the upper surface of the lower mold (50) and the one end face of the rotor core assembly (30) in the axial direction (upper surface of the first end plate (31) in FIG. 3). In this example, the upper mold (60) is provided with an introduction port (61), a sprue (62), and a plurality of (six in this example) runners (63) corresponding to the respective gate holes (32) formed in the first end plate (31) of the rotor core assembly (30).

The introduction port (61) is formed in a central portion of the upper surface (one end face in the axial direction) of the upper mold (60) to have a circular shape when viewed in plan. The sprue (62) penetrates the central portion of the upper mold (60) vertically (in the axial direction) to communicate with the introduction port (61). The sprue (62) is formed to have a transverse cross-section (a section orthogonal to the axial direction) which is circular, and a lower-end portion thereof is larger in diameter than a body portion thereof (portion higher than the lower-end portion). The runners (63) are grooves formed at a lower surface (the other end face in the axial direction) of the upper mold (60), and extend outward in the radial direction from the lower-end portion of the sprue (62). As depicted in FIG. 4, each runner (63) is formed such that the gate hole (32) corresponding to the runner (63) is positioned inside the runner (63) when viewed in plan (i.e., at a position overlapping the runner (63) when viewed from the axial direction of the rotor core (20)) with the lower mold (50) and the upper mold (60) being clamped together.

### [Rotor Manufacturing Process]

The process of manufacturing the rotor (10) according to the present embodiment will be described below with reference to FIG. 3 and FIG. 5. In this example, a mold-clamping step, an injection step, a solidification step, a mold-opening step, and a removal step are sequentially performed.

### <Mold-Clamping Step>

To begin with, as depicted in FIG. 3, the rotor core (20) is fitted into the recessed portion (51) of the lower mold (50), and the lower mold (50) into which the rotor core assembly (30) is fitted and the upper mold (60) are clamped together. In order to block melted resin from flowing into a shaft hole of the rotor core assembly (30) (the shaft hole (25) of the rotor core (20) and the through holes (35) of the first and second end plates (31, 36)), the shaft hole of the rotor core assembly (30) is sealed with a sealing member (not shown).

### <Injection Step>

Subsequently, as indicated by an arrow in FIG. 3, melted resin (molten thermoplastic resin) containing magnet powder is poured into the introduction port (61). The melted resin poured into the introduction port (61) flows downward through the sprue (62), and diverges into the runners (63) at a lower-end portion of the sprue (62). The melted resin flowing into the runners (63) flows outward in the radial direction through the runners (63), and is injected from the gate holes (32) of the first end plate (31) into the magnet holes (21) of the rotor core (20). Thus, the melted resin is charged into the magnet holes (21) of the rotor core (20). The melted resin is charged also into the gate holes (32) of the first end plate (31), the sprue (62) of the upper mold (60), and the runners (63).

### <Solidification Step>

Subsequently, the lower mold (50) and the upper mold (60) are cooled to reduce the temperature of the melted resin. This cooling solidifies the melted resin charged into the magnet holes (21) of the rotor core (20), the gate holes (32) of the first end plate (31), and the sprue (62) and the runners (63) of the upper mold (60). Thus, the bond magnets (40) are formed.

### <Mold-Opening Step>

Subsequently, the lower mold (50) and the upper mold (60) are opened to remove the rotor core assembly (30) from the lower mold (50). The sealing member (not depicted) is removed from the shaft hole of the rotor core assembly (30). As depicted in FIG. 5, an excess portion (70) is formed on one end side of the rotor core assembly (30) in the axial direction (side closer to the first end plate (31)). The excess portion (70) is a portion formed of resin (thermoplastic resin containing magnet powder) that has been charged into the sprue (62) and the runners (63) of the upper mold (60) and then solidified therein. In other words, the excess portion (70) is an additional and unneeded portion of the bond magnets (40), and is integrated with the bond magnets (40) charged into the magnet holes (21) of the rotor core (20) and the gate holes (32) of the first end plate (31). In this example, the excess portion (70) extends radially from a central portion of the one end face of the rotor core assembly (30) in the axial direction (first end plate (31)) toward the gate holes (32) when viewed in plan.

### <Removal Step>

Subsequently, the excess portion (70) on the one end side of the rotor core assembly (30) in the axial direction (side closer to the first end plate (31)) is removed. In this example, as indicated by the hollow arrow in FIG. 5, a striking member (not shown) formed in a shaftlike shape is inserted into the shaft hole of the rotor core assembly (30) to hit the excess portion (70) in order to act a force in a direction in which the excess portion (70) is separated apart from the bond magnets (40) (hereinafter, referred to as "tensile force") on junctions between the excess portion (70) and the bond magnets (40). This tensile force breaks the junctions between the excess portion (70) and the bond magnets (40), and separates the excess portion (70) apart from the bond magnets (40). Consequently, as depicted in FIG. 1 and FIG. 2, a gate mark (41) is formed at one end portion of each bond magnet (40) in the axial direction, and a portion that has been separated apart from the excess portion (70) by breakage due to the tensile force (i.e., a portion corresponding to the junction between the excess portion (70) and the bond magnet (40) and charged into the corresponding gate hole (32)). In other words, the gate mark (41) is a broken section that has been formed by the breakage of the junction between the excess portion (70) and the bond magnet (40) (a surface having fine projections and depressions formed by the breakage).

### [Comparative Example of Rotor]

A comparative example of the rotor (10) (will be hereinafter referred to as a "rotor (90)") will be described below with reference to FIG. 6. which is not part of the invention. In the rotor (90), the rotor core (20) does not have the first end plate (31) on the one end side thereof in the axial direction, and the second end plate (36) on the other end side thereof in the axial direction. Configurations other than this feature are the same as the configurations of the rotor (10) according to the present embodiment, which is not part of the invention.

In a process of manufacturing the rotor (90), steps (a mold-clamping step, an injection step, a solidification step, a mold-opening step, and a removal step) similar to those in the process of manufacturing the rotor (10) according to the present embodiment are performed. Specifically, in the process of manufacturing the rotor (90), the sprue (62) and the runners (63) are brought into contact with the upper side (one end side in the axial direction) of the rotor core (20), and then melted resin is injected directly from the runners (63) into the respective magnet holes (21) of the rotor core (20). Thus, in the process of manufacturing the rotor (90), the cross-sectional area of junctions (junction area) between the excess portion (70) and the bond magnets (40) tends to be larger as compared with in the case where a plurality of gates vertically extends from the runners (63) toward the magnet holes (21) of the rotor core (20) (e.g., the case of Patent Document 1). This makes it difficult at the removal step to break the junctions between the excess portion (70) and the bond magnets (40) along one end face of each bond magnet (40) in the axial direction. Thus, as depicted in FIG. 6, breaking the junctions between the excess portion (70) and the bond magnets (40) under the tensile force may cause manufacturing failure in which part of the excess portion (70) remains as a broken piece (75) on one end side of each bond magnet (40) in the axial direction.

### [Advantages of Embodiment]

By contrast, in the process of manufacturing the rotor (10) (specifically, the removal step) of the present embodiment, the excess portion (70) formed on the one end side (side closer to the first end plate (31)), in the axial direction, of the assembly of the rotor core (20) and the first end plate (31) (the rotor core assembly (30)) is removed. The excess portion (70) is an additional and unneeded portion of the bond magnets (40), and is integrated with the bond magnets (40) charged into the magnet holes (21) of the rotor core (20) and the gate holes (32) of the first end plate (31). Specifically, in the process of manufacturing the rotor (10), force acting in a direction in which the excess portion (70) is separated apart from the bond magnets (40) (i.e., tensile force) is applied to the junctions between the excess portion (70) and the bond magnets (40). This tensile force breaks the junctions between the excess portion (70) and the bond magnets (40) and separates the excess portion (70) apart from the bond magnets (40).

In the present embodiment, which is not part of the invention, each gate hole (32) is formed to be smaller than the corresponding magnet hole (21) and is arranged inside the corresponding magnet hole (21) when viewed in plan, which can reduce the cross-sectional area (junction area) of the junctions between the excess portion (70) and the bond magnets (40). Accordingly, the tensile stress applied to the junctions between the excess portion (70) and the bond magnets (40) (specifically, junction surfaces thereof extending along the one end face of the first end plate (31) in the axial direction) can be increased in the process of manufacturing the rotor (10). Thus, when the tensile force is applied to the junctions between the excess portion (70) and the bond magnets (40) in process of manufacturing the rotor (10), the junctions between the excess portion (70) and the bond magnets (40) can be caused to break along the one end face of the first end plate (31) in the axial direction. This can consequently reduce the possibility of occurrence of manufacturing failure of the rotor (10) in which part of the excess portion (70) remains as a broken piece (75) on one end side of each bond magnet (40) in the axial direction.

Due to the reduced possibility of occurrence of manufacturing failure of the rotor (10), i.e., part of the excess portion (70) remains as a broken piece (75) on the one end side of each bond magnet (40) in the axial direction, the possibility of the defective assembly of the rotary electric machine (1) due to the manufacturing failure of the rotor (10) can be reduced.

In a case where gates vertically extend from a sprue runner toward slits (magnet holes) of a rotor core as described in Patent Document 1 (Japanese Unexamined Patent Publication No. 2003-47212), melted resin (molten thermoplastic resin) containing magnet powder tends to be lowered in temperature as it passes through the gates, and the viscosity of the melted resin accordingly increases. Thus, the melted resin is not smoothly distributed into the magnet holes of the rotor core, which makes it difficult to increase the degree of orientation of resin (bond magnet) that has been charged into the magnet holes of the rotor core and solidified therein.

By contrast, the rotor (10) according to the present embodiment, which is not part of the invention, does not have the gates vertically extending from the sprue runner toward the magnet holes of the rotor core unlike the rotor of Patent Document 1. This can prevent or reduce the increase in the viscosity of the melted resin due to the temperature decrease of the melted resin in the gates. Thus, the melted resin can be more easily distributed into the magnet holes (21) of the rotor core (20) than in the case of Patent Document 1, which can consequently increase the degree of orientation of resin (i.e., the bond magnets (40)) that has been charged into the magnet holes (21) of the rotor core (20) and solidified therein.

### (Rotor according to the invention)

As depicted in FIG. 7, each gate hole (32) of the rotor (10) may include a plurality of (three in this example) separate gate holes (33). In other words, a plurality of separate gate holes (33) may be provided for each magnet hole (21).

The separate gate holes (33) penetrate the first end plate (31) in the axial direction to communicate with the corresponding magnet hole (21) of the rotor core (20). Each of the separate gate holes (33) is formed to be smaller than the magnet hole (21) corresponding to the separate gate holes (33) and is positioned inside the magnet hole (21) corresponding to the separate gate holes (33) when viewed in plan. In other words, the separate gate holes (33) are formed at positions overlapping the magnet hole (21) when viewed from the axial direction of the rotor core (20). In this example, each separate gate hole (33) is formed in a circular shape (circular shape having a diameter equal to or larger than one millimeter and equal to or smaller than five millimeters, for example) when viewed in plan.

In FIG. 7, the separate gate holes (33) include a central hole (33a) positioned at a circumferentially central portion of the magnet hole (21) and end holes (33b) positioned at circumferentially end portions of the magnet hole (21). In other words, in FIG. 7, three separate gate holes (33) are formed for each magnet hole (21), and one central hole (33a) and two end holes (33b) constitute three separate gate holes (three separate gate holes (33) formed for each magnet hole (21)).

The upper mold (60) used in the process of manufacturing the rotor (10) depicted in FIG. 7 may be configured as follows. Specifically, the upper mold (60) may be provided with a plurality of runners (63) corresponding to one or more separate gate holes (33) among a plurality of (18 in the example of FIG. 7) separate gate holes (33) each formed in the first end plate (31) of the rotor core assembly (30) (e.g., 18 runners (63) each corresponding to 18 separate gate holes (33)). Each runner (63) may be formed such that one or more separate gate holes (33) corresponding to the runner (63) are positioned inside the runner (63) when viewed in plan with the lower mold (50) and the upper mold (60) being clamped together.

In the process of manufacturing the rotor (10) depicted in FIG. 7 (specifically, in the injection step), melted resin poured into the introduction port (61) of the upper mold (60) flows through the sprue (62) and the runners (63) in this order, and then is injected from the separate gate holes (33) of the first end plate (31) into the magnet holes (21) of the rotor core (20).

### <Advantages of the Rotor According to the Invention>

In the rotor (10) depicted in FIG. 7, each gate hole (32) includes a plurality of separate gate holes (33). This can increase the amount of melted resin (molten resin that forms the bond magnets) introduced per unit time into the magnet holes (21) in the process of manufacturing the rotor (10). Thus, the melted resin can be quickly distributed in the magnet hole (21), and consequently the degree of orientation of resin (i.e., the bond magnets (40)) that has been charged into the magnet holes (21) of the rotor core (20) and solidified therein can be increased.

Each gate hole (32) includes the central hole (33a) and the end holes (33b), which can distribute the melted resin in the corresponding magnet hole (21) more evenly than when the separate gate holes (33) are distributed unevenly in a circumferentially central portion (or circumferentially end portions) of the magnet hole (21). Thus, the degree of orientation of resin (i.e., the bond magnets (40)) that has been charged into the magnet holes (21) of the rotor core (20) and solidified therein can be increased.

### (A modification of the rotor which is not part of the invention)

As depicted in FIG. 8, each magnet hole (21) of the rotor (10) may be partitioned with one or more (two in this example) bridges (22) into a plurality of (three in this example) separate magnet holes (23). Each gate hole (32) may include a plurality of (three in this example) separate gate holes (33) communicating with the respective separate magnet holes (23). In FIG. 8, one separate gate hole (33) is provided for each separate magnet hole (23).

Each separate gate hole (33) penetrates the first end plate (31) in the axial direction to communicate with the corresponding separate magnet hole (23) of the rotor core (20). Each separate gate hole (33) is formed to be smaller than the separate magnet hole (23) corresponding to the separate gate hole (33) and is positioned inside the separate magnet hole (23) corresponding to the separate gate hole (33) when viewed in plan. In other words, each separate gate hole (33) is formed at a position overlapping the corresponding separate magnet hole (23) when viewed from the axial direction of the rotor core (20). In FIG. 8, each separate gate hole (33) is formed in a circular shape (circular shape having a diameter equal to or larger than one millimeter and equal to or smaller than five millimeters, for example) when viewed in plan. In FIG. 8, in this example, each separate gate hole (33) is arranged at a circumferentially central portion of the corresponding separate magnet hole (23).

The upper mold (60) used in the process of manufacturing the rotor (10) depicted in FIG. 8 may be configured as follows. Specifically, the upper mold (60) is provided with a plurality of runners (63) corresponding to one or more separate gate holes (33) among a plurality of (36 in the example of FIG. 8) separate gate holes (33) each formed in the first end plate (31) of the rotor core assembly (30). Each runner (63) may be formed such that one or more separate gate holes (33) corresponding to the runner (63) are positioned inside the runner (63) when viewed in plan (i.e., at positions overlapping the runner (63) when viewed from the axial direction of the rotor core (20)) with the lower mold (50) and the upper mold (60) being clamped together.

In the process of manufacturing the rotor (10) depicted in FIG. 8 (specifically, in the injection step), melted resin poured into the introduction port (61) of the upper mold (60) flows through the sprue (62) and the runners (63) in this order, and then is injected from the separate gate holes (33) of the first end plate (31) into the magnet holes (21) of the rotor core (20).

### <Advantages of the modification of the rotor which is not part of the invention>

In the modification of the rotor (10) depicted in FIG. 8, each gate hole (32) includes a plurality of separate gate holes (33) communicating with the respective separate magnet holes (23), which allows melted resin (molten resin that forms the bond magnets) to be charged into each of the separate magnet holes (23). Furthermore, each separate gate hole (33) is formed to be smaller than the corresponding separate magnet hole (23), and the separate gate hole (33) is arranged inside the separate magnet hole (23) when viewed in plan. Thus, tensile force, if applied to the junctions between the excess portion (70) and the bond magnets (40) in the process of manufacturing the rotor (10), can break the junctions between the excess portion (70) and the bond magnets (40) along the one end face of the first end plate (31) in the axial direction in the respective separate gate holes (33). This can consequently reduce the possibility of occurrence of manufacturing failure of the rotor (10), i.e., part of the excess portion (70) remains as a broken piece (75) on one end side of each bond magnet (40) in the axial direction.

### (Other Embodiments)

In the foregoing description, an example has been described in which the first and second end plates (31, 36) are each made of a nonmagnetic material. However, the first and second end plates (31, 36) each may be made of a magnetic material.

In the foregoing description, an example has been described in which the gate holes (32) are not formed in the second end plate (36). However, the gate holes (32) may be formed in the second end plate (36). In other words, the second end plate (36) may be configured in the same manner as the first end plate (31).

The shape of each magnet hole (21) may be a U-shape protruding radially inward as depicted in FIG. 1, may be an arc shape protruding radially inward as depicted in FIG. 8, or may be another shape.

The number of bond magnets (40) constituting a single pole of the rotor (10) may be one as depicted in FIG. 1, may be three as depicted in FIG. 8, or may be another number.

In the foregoing description, examples have been described that are the case in which a plurality of (six in the example of FIG. 1) runners (63) corresponding to the respective gate holes (32) are formed in the upper mold (60) and the case in which a plurality of runners (63) corresponding to one or more separate gate holes (33) among a plurality of (18 in the example of FIG. 7, and 36 in the example of FIG. 8) separate gate holes (33) are formed in the upper mold (60). However, the runners (63) may be omitted from the upper mold (60), and the sprue (62) may be formed in the upper mold (60) as follows. Specifically, the sprue (62) may be formed such that all of a plurality of gate holes (six gate holes (32) in the example of FIG. 1, 18 separate gate holes (33) in the example of FIG. 7, and 36 separate gate holes (33) in the example of FIG. 8) formed in the first end plate (31) of the rotor core assembly (30) are positioned inside a lower-end portion of the sprue (62) when viewed in plan with the lower mold (50) and the upper mold (60) being clamped together. With the sprue (62) configured in this manner, melted resin poured into the introduction port (61) of the upper mold (60) flows through the sprue (62) to be injected from the gate holes (32) or the separate gate holes (33) of the first end plate (31) into the magnet holes (21) of the rotor core (20) in the process of manufacturing the rotor (10) (specifically, the injection step).

The embodiments and modifications are merely examples in nature, and are not intended to limit the scope, application, or uses of the present disclosure. The scope of the invention is defined by the appended claims.

### INDUSTRIAL APPLICABILITY

As described in the foregoing, the above-described rotor can be used in rotary electric machines such as electric motors and generators.

### DESCRIPTION OF REFERENCE CHARACTERS

- 1: Rotary Electric Machine
- 10: Rotor
- 11: Stator
- 12: Drive Shaft
- 15: Stator Core
- 16: Coil
- 17: Back-Yoke Portion
- 18: Tooth Portion
- 20: Rotor Core
- 21: Magnet Hole
- 22: Bridge
- 23: Separated Magnet Hole
- 25: Shaft Hole
- 30: Rotor Core Assembly
- 31: First End Plate
- 32: Gate Hole
- 33: Separate Gate Hole
- 33a: Central Hole
- 33b: End Hole
- 35: Through Hole
- 36: Second End Plate
- 40: Bond Magnet
- 41: Gate Mark
- 50: Lower Mold
- 51: Recessed Portion
- 60: Upper Mold
- 61: Introduction Port
- 62: Sprue
- 63: Runner
- 70: Excess Portion
- 75: Broken Piece

## Claims

1. A rotor comprising:
a rotor core (20) having a magnet hole (21) penetrating the rotor core (20) in an axial direction;
a first end plate (31) provided for one end side of the rotor core (20) in the axial direction and having a plurality of gate holes (33) communicating with the magnet hole (21); and
a bond magnet (40) charged into the magnet hole (21) and the plurality of gate holes (33) from which the melted resin containing magnet powder is injected into the magnet hole (21),
wherein the plurality of gate holes (33) are formed to be smaller than the magnet hole (21) and are positioned inside the magnet hole (21) when viewed in plan, **characterized in that**
the plurality of gate holes (33) include a central hole (33a) positioned at a circumferentially central portion of the magnet hole (21) and two end holes (33b, 33c) positioned at circumferentially end portions of the magnet hole (21).

2. A rotary electric machine comprising:
the rotor of claim 1; and
a stator (11) in which the rotor is inserted.

## Patentansprüche

1. Rotor, umfassend:
einen Rotorkern (20) mit einem Magnetloch (21), das den Rotorkern (20) in einer axialen Richtung durchdringt;
eine erste Endplatte (31), die für eine Endseite des Rotorkerns (20) in der axialen Richtung vorgesehen ist und eine Vielzahl von Durchlasslöchern (33) aufweist, die mit dem Magnetloch (21) in Verbindung stehen; und
einen Verbundmagneten (40), der in das Magnetloch (21) und die Vielzahl von Durchlasslöchern (33) geladen ist, aus dem das geschmolzene Harz, das Magnetpulver enthält, in das Magnetloch (21) injiziert ist, wobei
die Vielzahl von Durchlasslöchern (33) so ausgebildet sind, dass sie kleiner als das Magnetloch (21) sind und in der Draufsicht innerhalb des Magnetlochs (21) angeordnet sind, **dadurch gekennzeichnet, dass** die Vielzahl von Durchlasslöchern (33) ein zentrales Loch (33a), das an einem in Umfangsrichtung zentralen Abschnitt des Magnetlochs (21) angeordnet ist, und zwei Endlöcher (33b, 33c), die an in Umfangsrichtung endseitigen Abschnitten des Magnetlochs (21) angeordnet sind, umfasst.

2. Rotierende elektrische Maschine, umfassend:
den Rotor nach Anspruch 1; und
einen Stator (11), in den der Rotor eingesetzt ist.

## Revendications

1. Rotor, comprenant :
un noyau de rotor (20) possédant un orifice d'aimant (21) pénétrant dans le noyau de rotor (20) dans un sens axial ;
une première flasque (31) agencée pour un côté terminal du noyau de rotor (20) dans le sens axial, et doté d'une pluralité de trous de grille (33) communiquant avec l'orifice d'aimant (21) ; et
un aimant à liaison (40) chargé dans l'orifice d'aimant (21) et la pluralité de trous de grille (33) de laquelle de la résine fondue contenant de la poudre magnétique est injectée dans l'orifice d'aimant (21),
la pluralité de trous de grille (33) étant agencée de façon à ce que les trous soient plus petits que l'orifice d'aimant (21) et étant positionnée à l'intérieur de l'orifice d'aimant (21) lorsqu'il est vu en plan,
**caractérisé en ce que**
la pluralité de trous de grille (33) comprend un orifice central (33a) positionné sur une partie centrale, de façon circonférentielle, de l'orifice d'aimant (21) et deux orifices terminaux (33b, 33c) positionnés sur des parties d'extrémité circonférentielles de l'orifice d'aimant (21).

2. Machine électrique rotative, comprenant :
le rotor selon la revendication 1 ; et
un stator (11) dans lequel est inséré le rotor.
